# EUROPÄISCHE PATENTANMELDUNG

(11) **EP 1 321 180 A2**
(43) Veröffentlichungstag der Anmeldung: **25.06.2003**
(21) Anmeldenummer: 02027725.7
(22) Anmeldetag: 11.12.2002
(51) Int. Cl.: B01F 15/00, B29B 7/18

(54) **Innenmischer**

(30) Priorität: 18.12.2001 DE 10161779
(71) Anmelder: ThyssenKrupp Elastomertechnik GmbH, 57258 Freudenberg (DE)
(72) Erfinder: Häder, Walter, 2340 Mödling (AT); Limper, Andreas, Prof., 57258 Freudenberg (DE)
(74) Vertreter: Rau, Manfred, Dr. Dipl.-Ing.

(57) **Zusammenfassung**

Bei einem Innenmischer sind die Lagergehäuse (20") der Lager-Einrichtungen (17") für die Wellenzapfen (15") der Rotoren (10) direkt an den Stirnwänden (2) des Gehäuses (1) angebracht. Die zwischen Rotor (10) und Stirnwand (2) und zwischen dem Wellenzapfen (15") und der Stirnwand (2) ausgebildeten Spalte (36, 37) sind über Abführkanäle (40") mit der Außenseite verbunden. Diese Abführkanäle (40") überbrücken das im Lagergehäuse (20") gekapselt angeordnete Lager (26).

## Beschreibung

Die Erfindung betrifft einen Innenmischer nach dem Oberbegriff des Anspruches 1.

Derartige durch offenkundige Vorbenutzung bekannt gewordene Innenmischer weisen vom Gehäuse des Innenmischers gesonderte Lagerböcke auf, die im Abstand von den Stirnwänden des Gehäuses angeordnet sind. Zwischen den Wellenzapfen und den Stirnwänden sind Dichtungen in Form von Stopfbuchs-Packungen oder dergleichen angeordnet. In derartigen Innenmischem wird primär Gummi mit Ruß und sonstigen Füllstoffen und Zuschlägen geknetet. Insbesondere Rußpartikel dringen als Schmutz durch die Dichtungen nach außen. Diese Schmutz-Partikel können durch Zufuhr von Öl oder anderem geeigneten Bindemittel im Bereich der Dichtung angepastet und damit gebunden werden. Der Nachteil dieser bekannten Ausgestaltung liegt darin, daß die Lager verhältnismäßig weit vom Gehäuse entfernt sind und die Rotoren damit verhältnismäßig lang werden. Dies ergibt einerseits ungünstige Biegelinien der Rotoren und führt andererseits zu größeren Durchmessern und höherem Gewicht der Rotoren. Dies führt wiederum dazu, daß die Lager stabiler ausgebildet werden müssen. Des weiteren ist die Reinigung zwischen den Lagerböcken und den Dichtungen sehr schwierig, da die Lagerböcke wiederum nicht so weit von den Stirnwänden entfernt angeordnet sind, daß der Zwischenraum und der Dichtungsbereich leicht zugänglich sind.

Der Erfindung liegt die Aufgabe zugrunde, den Innenmischer der gattungsgemäßen Art so auszugestalten, daß die Lagerung der Rotoren vereinfacht und deren Abdichtung verbessert wird.

Diese Aufgabe wird erfindungsgemäß durch die Merkmale im Kennzeichnungsteil des Anspruches 1 gelöst. Durch diese Maßnahmen wird erreicht, daß keine vom Gehäuse gesonderten Lagerböcke erforderlich sind, sondern die Lagergehäuse direkt an der jeweiligen Stirnwand angebracht sind. Dies führt zu einer Verkürzung der Rotoren, und zwar insbesondere der Wellenzapfen und damit zu einer Verbesserung der Biegelinie der Rotoren. Ihr Durchmesser kann geringer werden. Eine komplizierte Reinigung zwischen Lagerbock und Stirnwand bzw. Dichtung entfällt, da die Schmutz-Partikel am Lager vorbei nach außen abgeführt werden.

Weitere zum Teil erfinderische Ausgestaltungen ergeben sich aus den Unteransprüchen.

Weitere Merkmale, Vorteile und Einzelheiten der Erfindung ergeben sich aus der nachfolgenden Beschreibung von drei Ausführungsbeispielen anhand der Zeichnung. Es zeigt
- Fig. 1: einen vertikalen Schnitt durch einen Innenmischer,
- Fig. 2: eine Stirnansicht eines Teils des Innenmischers entsprechend dem Sichtpfeil II in Fig. 1,
- Fig. 3: einen vertikalen Querschnitt durch eine erste Ausführungsform eines Lagers des Innenmischers entsprechend der Schnittlinie III-III in Fig. 1,
- Fig. 4: einen Teil-Längsschnitt durch das Lager entsprechend der Schnittlinie IV-IV in Fig. 3,
- Fig. 5: eine Stirnansicht einer zweiten Ausführungsform eines Lagers,
- Fig. 6: einen Teil-Längsschnitt durch das Lager der zweiten Ausführungsform,
- Fig. 7: eine dritte Ausführungsform eines Lagers in einer Draufsicht entsprechend Fig. 2 und
- Fig. 8: einen Teil-Längsschnitt durch das Lager der dritten Ausführungsform.

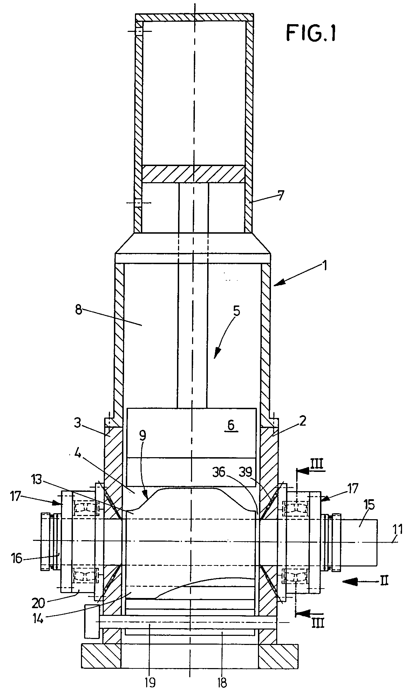

Der in Fig. 1 dargestellte Innenmischer weist ein Gehäuse 1 mit Stirnwänden 2, 3 und eine oberhalb eines vom Gehäuse 1 umschlossenen Mischraums 4 angeordnete Stopfeinrichtung 5 auf. Diese Stopfeinrichtung 5 weist einen dem Mischraum 4 zugewandten Stopfstempel 6 auf, der mittels eines auf dem Gehäuse 1 angebrachten, hydraulisch beaufschlagbaren Kolben-Zylinder-Antriebs 7 in der Vertikalen zum Mischraum 4 hin und von diesem wegbewegbar ist. Der Stopfstempel 6 begrenzt den Mischraum 4 nach oben. Oberhalb des Mischraums 4 ist im Wege des Stopfstempels 6 eine Einlaßöffnung 8 für zu bearbeitendes Material, in der Regel Gummi, ausgebildet.

Im Mischraum 4 sind zwei Rotoren 9, 10 mit parallel zueinander und in einer gemeinsamen horizontalen Ebene verlaufenden Achsen 11, 12 angeordnet. Die Rotoren 9, 10, von denen in Fig. 1 nur der Rotor 9 dargestellt ist, weisen im Mischraum 4 zylindrische Rotorkörper 13 auf, auf denen als Mischeinrichtung dienende Mischflügel 14 angebracht sind. Die Mischflügel 14 der beiden Rotoren 9, 10 kämmen miteinander. Am jeweils etwa bis zur Stirnwand 2 bzw. 3 führenden Rotorkörper 13 sind koaxial mit den Achsen 11 bzw. 12 Wellenzapfen 15, 16 ausgebildet, die in außerhalb der Stirnwände 2, 3 angeordneten Lager-Einrichtungen 17 drehbar gelagert sind. An jedem Innenmischer sind vier im Grundsatz gleiche Lager-Einrichtungen 17 vorgesehen. Die Rotoren 9, 10 werden von einem nicht dargestellten Antriebsmotor über ein ebenfalls nicht dargestelltes Verzweigungsgetriebe über die Wellenzapfen 15, 16 angetrieben. Unterhalb des Mischraums 4 ist eine Auslaßklappe 18 angeordnet, die um eine Achse 19 schwenkbar gelagert ist. Soweit der Innenmischer bis hierher beschrieben ist, ist er allgemein bekannt und in der Praxis seit langem verbreitet und in vielen Ländern auch unter dem Namen "Werner & Pfleiderer-Mischer" bekannt.

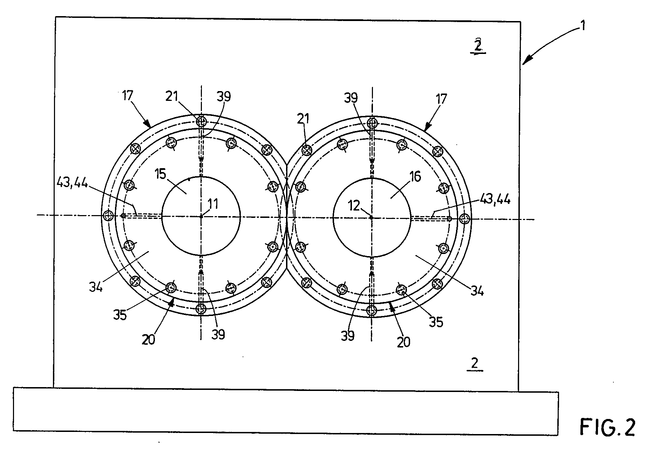

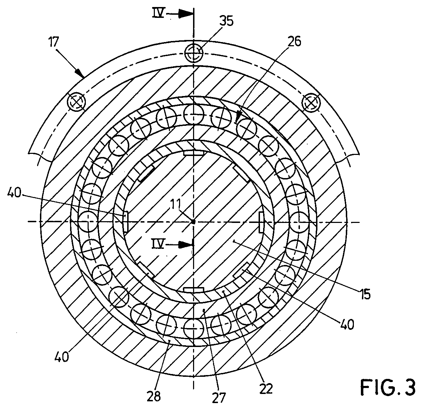

Die Lager-Einrichtungen 17 weisen bei der Ausführungsform nach den Fig. 1 bis 4 Lagergehäuse 20 auf, die direkt an der jeweiligen Stirnwand 2 bzw. 3 mittels Schrauben 21 befestigt sind. Da die Lager-Einrichtungen 17 jeweils gleich ausgebildet sind, wird nachfolgend nur eine beschrieben.

Auf dem jeweiligen Wellenzapfen 15 ist eine Lagerbuchse 22 gegenüber dem jeweiligen Wellenzapfen 15 undrehbar angebracht, die auf der der jeweiligen Stirnwand 2 zugewandten Seite einen Ringflansch 23 aufweist. An dem dem Ringflansch 23 abgewandten Ende der Lagerbuchse 22 ist ein gegen die Lagerbuchse 22 anliegender, ebenfalls drehfest auf dem Wellenzapfen 15 angebrachter Flanschring 24 angeordnet. Das Lagergehäuse 20 weist eine zum Wellenzapfen 15 hin durch die Lagerbuchse 22 mit dem Ringflansch 22 und dem Flanschring 24 begrenzte Ausnehmung 25 auf, in der ein Wälzlager 26 angeordnet ist, dessen Innenring 27 sich gegen die Lagerbuchse 22 abstützt, während sein Außenring 28 sich gegen die Innenwand 29 des Lagergehäuses 20 abstützt. Die Ausnehmung 25 des Lagergehäuses 20 wird auf der der Stirnwand 2 benachbarten Seite durch einen Ringsteg 30 und auf der außenliegenden Seite durch einen Deckelring 31 begrenzt. Am Ringsteg 30 und am Deckelring 31 sind gegen den Ringflansch 23 bzw. den Flanschring 24 anliegende und hiergegen dichtende Dichtungen 32, 33 angeordnet, die die Ausnehmung 25 vor dem Eindringen von Fremdstoffen gleich welcher Art und damit entsprechend das Wälzlager 26 schützen. Das Wälzlager 26 ist also in einer Kapselung angeordnet. Gegen das Lagergehäuse 20 liegt von außen ein Deckel 34 an, der auch gegen den Deckelring 31 anliegt. Er ist mit dem Lagergehäuse 20 mittels Schrauben 35 verbunden, die auch den Deckelring 31 durchsetzen.

Zwischen der Stirnwand 2 und dem Wellenzapfen 15 ist keine Dichtung vorgesehen. Zwischen dem Rotorkörper 13 und der Stirnwand 2 ist ein konstruktions-, betriebs- und fertigungsbedingter, ringscheibenförmiger Spalt 36 vorhanden. Durch diesen Spalt 36 wandert - physikalisch unvermeidbar aufgrund des sogenannten "Weißenberg-Effekts" - Schmutz in Form feiner Partikel des zu bearbeitenden Materials, also in Form feiner Partikel von Gummi, Ruß und sonstigen Füllstoffen, zum Wellenzapfen 15 und dort durch einen ebenfalls konstruktions-, betriebs- und fertigungsbedingt notwendigen zylinderringförmigen Ringspalt 37 zwischen der Stirnwand 2 und dem Wellenzapfen 15 nach außen. Die Breite der Spalte 36, 37 beträgt jeweils 1 mm bis 2 mm. Um Verschleiß zwischen der Stirnwand 2 und dem Rotorkörper 13 zu vermeiden, kann in diesem Bereich in die Stirnwand 2 eine Verschleißscheibe 38 eingesetzt sein.

Zum Abführen der erwähnten Schmutz-Partikel unter Umgehung des Wälzlagers 26 sind eine Reihe von Maßnahmen getroffen.

Durch das Lagergehäuse 20, die Stirnwand 2 und die Verschleißscheibe 38 fuhren von außen ein oder mehrere Zufuhrkanäle 39, die in dem zylinderringförmigen Ringspalt 37 in der Nähe des Rotorkörpers 13 enden. Durch diese Zuführkanäle 39 wird Öl zugeführt, mit dem die Schmutz-Partikel, die in der geschilderten Weise in den Ringspalt 37 gelangen, angepastet werden. Die Paste wird durch in dem jeweiligen Wellenzapfen 15 als Längs-Nuten ausgebildete Abführkanäle 40 innerhalb des Lagergehäuses 20 und innerhalb der Lagerbuchse 22 nach außen abgeführt, wobei die Abführung unter anderem durch den Druck bewirkt wird, der über den scheibenförmigen Spalt 36 vom Mischraum 4 her in Richtung zum Wellenzapfen 15 hin wirkt. Da zwischen dem Ringflansch 23, der Lagerbuchse 22 und der Stirnwand 2 einerseits und dem Flanschring 24 und dem Deckel 34 andererseits jeweils ein konstruktions-, betriebs- und fertigungsbedingter scheibenförmiger Ringspalt 41 bzw. 42 besteht, dringen unvermeidbar die angepasteten Schmutz-Partikel in diese Ringspalte 41, 42 ein, die zu den Abführkanälen 40 hin offen sind. Um zu vermeiden, daß diese angepasteten Schmutz-Partikel - wenn auch in geringer Menge - an den Dichtungen 32, 33 vorbei zum Wälzlager 26 gelangen, sind anschließend an die Ringspalte 41, 42 radiale Entlastungskanäle 43, 44 vorgesehen, die durch Nuten oder Bohrungen gebildet sein können. Diese Entlastungskanäle 43, 44 münden in einen durch den Deckel 34 nach außen führenden Auslaßkanal 45.

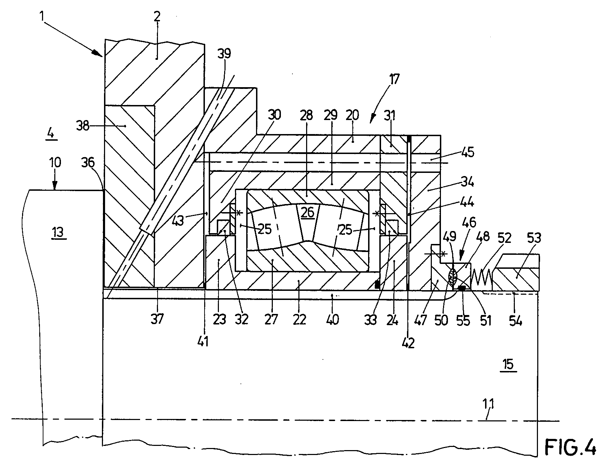

Die Abführkanäle 40 enden in einer Dichtungs- und Austritts-Einrichtung 46. Diese weist gemäß Fig. 4 einen mit dem Lagerdeckel 34 verbundenen, also gegenüber dem Lagergehäuse 20 ortsfesten Abschluß-Ring 47 auf, dem ein gegenüber dem Wellenzapfen 15 undrehbarer Abschluß-Gegenring 48 zugeordnet ist. Beide Ringe 47, 48 weisen in der Stoßfuge 49 zwischen den Ringen 47, 48 aneinander anliegende Dichtungen 50, 51 aus einem hochverschleißfesten Werkstoff, beispielsweise einem Hartmetall, auf. Der Abschluß-Gegenring 48 wird mit der von ihm aufgenommenen Dichtung 51 mittels einer vorgespannten Druckfeder 52 als Kraftspeicher gegen den Abschluß-Ring 47 gedrückt, so daß jedenfalls die Dichtungen 50, 51 dichtend, aber gegeneinander drehbar aneinander liegen. Die Druckfeder 52 stützt sich gegen ein Widerlager 53 ab, das beispielsweise durch eine auf ein Gewinde 54 am Ende des Wellenzapfens 15 auf diesen aufgeschraubten Mutter gebildet wird. Durch entsprechendes Verdrehen der Mutter und damit des Widerlagers 53 kann die Vorspannung der Druckfeder 52 und damit die Anpreßkraft der Dichtungen 50, 51 gegeneinander eingestellt werden.

Wie bereits erwähnt, wandern die Schmutz-Partikel durch die Abführkanäle 40. Wenn der Druck im Bereich der Dichtungen 50, 51 ausreichend groß wird, dann wird der angepastete Schmutz in Form kleiner Tröpfchen durch die Stoßfuge 49, also zwischen den Dichtungen 50, 51 hindurch, nach außen gefördert und abgeschleudert.

Der Abschluß-Gegenring 48 ist naturgemäß mittels einer Dichtung 55 gegenüber dem Wellenzapfen 15 abgedichtet.

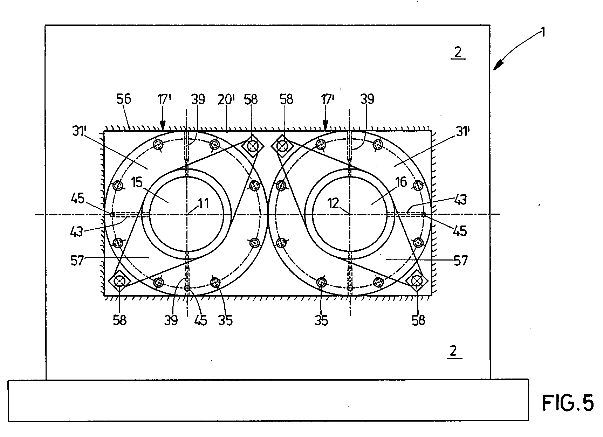

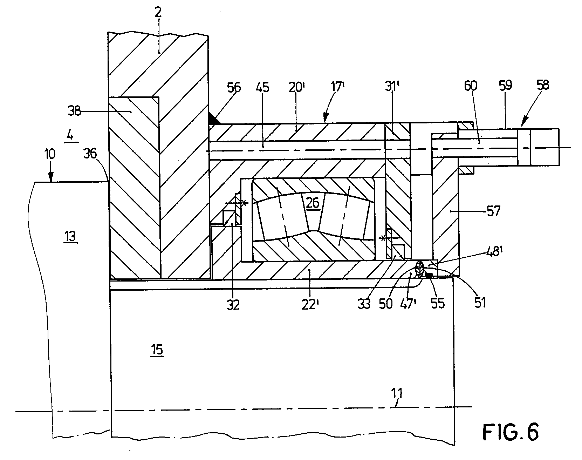

Die zweite Ausführungsform nach den Fig. 5 und 6 unterscheidet sich im wesentlichen von der zuvor geschilderten Ausführungsform durch die Mittel zur Andrückung der Dichtung 51 gegen die Dichtung 50. Es werden daher für identische Teile dieselben Bezugsziffern und für funktionell gleiche, konstruktiv aber geringfügig andere Teile dieselben Bezugsziffern wie bei der zuvor geschilderten ersten Ausführungsform verwendet, jedoch mit einem hochgesetzten Strich versehen, ohne daß es einer gesonderten erneuten Beschreibung bedürfte.

Bei dieser zweiten Ausführungsform ist für die an einer Stirnwand 2 angebrachten Lager-Einrichtungen 17' ein gemeinsames Lagergehäuse 20' vorgesehen, das an der Stirnwand 2 durch eine Schweißnaht 56 befestigt ist. Die Lagerbuchse 22' ist in diesem Fall im Bereich des Wellenzapfens 15 durch einen einen Deckel bildenden Deckelring 31' nach außen gezogen und bildet in diesem Bereich gleichzeitig den Abschluß-Ring 47'. Gegen den Abschluß-Gegenring 48' liegt eine Andrückplatte 57 an, die mittels zweier als Kraftspeicher dienender, druckmittelbeaufschlagbarer Kolben-Zylinder-Antriebe 58 die Dichtungen 50, 51 zusammendrückt. Der Zylinder 59 des jeweiligen Antriebs 58 ist mit dem Lagergehäuse 20' verbunden, während die Kolbenstange 60 des Antriebs 58 mit der Andrückplatte 57 verbunden ist. Die von den als Kraftspeicher dienenden Antrieben 58 auf die Dichtungen 50, 51 aufgebrachten Zusammendrück-Kräfte können durch den Druck des Druckmediums beeinflußt und damit eingestellt werden.

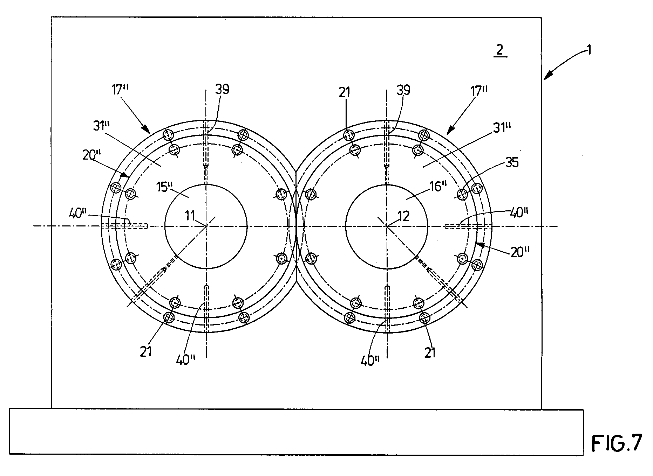

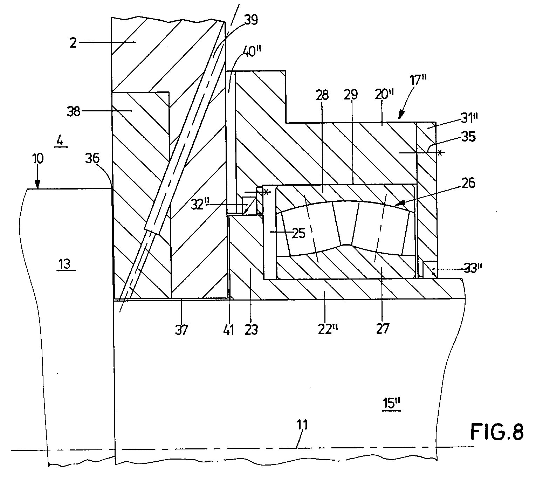

Die dritte Ausführungsform nach den Fig. 7 und 8 unterscheidet sich im wesentlichen von der ersten Ausführungsform nach den Fig. 1 bis 4 durch die Maßnahmen zum Abführen der angepasteten Partikel am Lager 26 vorbei. Es werden daher für identische Teile dieselben Bezugsziffern und für funktionell gleiche, konstruktiv aber geringfügig andere Teile dieselben Bezugsziffern wie bei der ersten Ausführungsform verwendet, jedoch mit einem hochgesetzten Doppelstrich versehen, ohne daß es einer gesonderten erneuten Beschreibung bedürfte.

Bei dieser dritten Ausführungsform sind im Wellenzapfen 15" keine Abfuhrkanäle in Form von Längs-Nuten ausgebildet. Vielmehr dient zum Abführen der aus dem zylinderringförmigen Spalt 37 austretenden angepasteten Partikel nur der scheibenförmige Ringspalt 41 zwischen dem Ringflansch 23 der Lagerbuchse 22" und der Stirnwand 2 des Gehäuses 1. Der radial zur Achse 11 verlaufende Entlastungskanal dient auch als Abführkanal 40". Der Deckelring 31" dient gleichzeitig als Deckel und schließt die Ausnehmung 25 des Lagergehäuses 20" ab. Diese das Wälzlager 26 aufnehmende Ausnehmung 25 ist - wie Fig. 8 erkennen läßt - vollständig mittels der Dichtungen 32", 33" abgedichtet.

## Patentansprüche

1. Innenmischer
- mit einem Gehäuse (1), das
- - einen Mischraum (4) umschließt und
- - einander gegenüberliegende Stirnwände (2, 3) aufweist,
- mit mindestens einem im Mischraum (4) angeordneten Rotor (9, 10), der
- - Mischeinrichtungen aufweist,
- - zur Stirnwand (2, 3) einen Spalt (36) begrenzt und
- - die Stirnwände (2, 3) aus dem Mischraum (4) nach außen unter Bildung eines mit dem Spalt (36) verbundenen Ringspaltes (37) durchsetzende Wellenzapfen (15, 16, 15") aufweist und
- mit Lager-Einrichtungen (17),
- - die außerhalb des Mischraums (4) angeordnet sind,
- - die jeweils ein Lagergehäuse (20, 20', 20") aufweisen und
- - in denen jeweils ein Wellenzapfen (15, 16, 15") in einem Lager (26) gelagert ist,
**dadurch gekennzeichnet,**
**daß** die Lagergehäuse (20, 20', 20") an den Stirnwänden (2, 3) angeordnet sind und
**daß** jedem Lagergehäuse (20, 20', 20") mindestens ein Abführkanal (40, 40") für Schmutz-Partikel zugeordnet ist, der mit dem Ringspalt (37) verbunden ist und das Lager (26) überbrückt.

2. Innenmischer nach Anspruch 1, **dadurch gekennzeichnet,**
**daß** das Lager (26) im Lagergehäuse (20, 20', 20") in einer Kapselung angeordnet ist.

3. Innenmischer nach Anspruch 1, **dadurch gekennzeichnet,**
**daß** in den Ringspalt (37) ein Zuführkanal (39) für Schmiermittel einmündet.

4. Innenmischer nach Anspruch 1, **dadurch gekennzeichnet,**
**daß** an dem der Stirnwand (2, 3) abgewandten Ende des Lagergehäuses (20, 20') eine zwischen dem Lagergehäuse (20, 20') und dem Wellenzapfen (15, 16) wirkende Dichtungs- und Austritts-Einrichtung (46) vorgesehen ist, an der mindestens ein Abführkanal (40) endet.

5. Innenmischer nach Anspruch 4, **dadurch gekennzeichnet,**
**daß** die Dichtungs- und Austritts-Einrichtung (46) zwei gegeneinander drehbare, eine Stoßfuge (49) begrenzende Dichtungen (50, 51) aufweist, wobei die Stoßfuge (49) an den mindestens einen Abführkanal (40) angeschlossen ist.

6. Innenmischer nach Anspruch 5, **dadurch gekennzeichnet,**
**daß** die beiden Dichtungen (50, 51) mittels mindestens eines Kraftspeichers gegeneinander drückbar sind.

7. Innenmischer nach Anspruch 6, **dadurch gekennzeichnet,**
**daß** die von dem mindestens einen Kraftspeicher ausgeübte Kraft einstellbar ist.

8. Innenmischer nach Anspruch 6, **dadurch gekennzeichnet,**
**daß** der mindestens eine Kraftspeicher durch eine vorgespannte Druckfeder (52) gebildet ist.

9. Innenmischer nach Anspruch 6, **dadurch gekennzeichnet,**
**daß** der mindestens eine Kraftspeicher durch einen druckmittelbeaufschlagbaren Kolben-Zylinder-Antrieb (58) gebildet ist.

10. Innenmischer nach Anspruch 1, **dadurch gekennzeichnet,**
**daß** mehrere Abführkanäle (40) vorgesehen sind, die durch Nuten im Wellenzapfen (15, 16) des mindestens einen Rotors (10) gebildet sind.

11. Innenmischer nach Anspruch 2, **dadurch gekennzeichnet,**
**daß** im Lagergehäuse (20, 20') mindestens ein die Kapselung des Lagers (26) umgebender, an den mindestens einen Abführkanal (40) angeschlossener, nach außen führender Entlastungskanal (43, 44) vorgesehen ist.

12. Innenmischer nach Anspruch 2, **dadurch gekennzeichnet,**
**daß** der mindestens eine Abführkanal (40") zwischen dem Gehäuse (1) und der Kapselung des Lagers (26) radial nach außen führt.
